# EUROPÄISCHE PATENTSCHRIFT

(11) **EP 1 629 887 B1**
(45) Veröffentlichungstag und Bekanntmachung des Hinweises auf die Patenterteilung: **11.04.2007**
(21) Anmeldenummer: 04018053.1
(22) Anmeldetag: 29.07.2004
(51) Int. Cl.: B01J 20/28, B01J 20/283

(54) **Monolithische Formkörper zur Aufreinigung und Trennung von Biopolymeren**
Monolithic shaped body for purification and separation of biopolymers
Corps formé monolithique pour la purification et la séparation de biopolymères

(43) Veröffentlichungstag der Anmeldung: 01.03.2006
(73) Patentinhaber: QIAGEN GmbH, 40724 Hilden (DE)
(72) Erfinder: Erbacher, Christoph, 42781 Haan (DE); Ritt, Christoph, 40764 Langenfeld (DE); Kirchmann, Markus, 45128 Essen (DE)

(56) Entgegenhaltungen:
- GB-A- 1 501 445
- US-A- 5 624 875
- US-B1- 6 207 098
- US-B1- 6 210 570
- US-B1- 6 531 060
- SIOUFFI A-M: "Silica gel-based monoliths prepared by the sol-gel method: facts and figures" JOURNAL OF CHROMATOGRAPHY A, ELSEVIER SCIENCE, NL, Bd. 1000, Nr. 1-2, 6. Juni 2003 (2003-06-06), Seiten 801-818, XP004427325 ISSN: 0021-9673

## Beschreibung

Die vorliegende Erfindung betrifft neuartige monolithische Formkörper, ein Verfahren zu deren Herstellung sowie deren Verwendung zur Aufreinigung und Trennung von Biopolymeren.

Durch die fortwährende Automatisierung und Miniaturisierung im Bereich der Biotechnologie wurde in den letzten Jahren verstärkt nach Lösungen, zum schnellen und effizienten Abarbeiten insbesondere minimaler Probenmengen gesucht. Gerade der Einsatz von vollautomatischen Hochdurchsatz-Arbeitsstationen fordert mehr und mehr Entwicklungen, mit denen in kürzester Zeit sehr hohe Probenanzahlen abgearbeitet, und zugleich geringste Mengen an biologischem Material reproduzierbar nachgewiesen werden können. Hierbei ist u. a. die Miniaturisierung von Filter- bzw. Trennvorrichtungen, wie beispielsweise von sogenannten Mikrotiter- oder multi-well-Platten gefragt. So sind inzwischen neben den gängigen 96-well-Platten auch Platten mit 384 Wells und 50 µl Volumen pro Well bereits Standard. Darüber hinaus gibt es seit einiger Zeit 1536-well-Platten mit Volumina von 5 bis 10 µl pro Well.

In Verbindung mit herkömmlichen Filtermaterialien zur Aufreinigung und Trennung von Biopolymeren stößt der technologische Fortschritt jedoch beim Einsatz derartig kleiner Wells an seine Grenzen. Besonders dann, wenn die Filter- bzw. Trennmaterialien obendrein sehr gute selektive Eigenschaften und hohe Bindekapazitäten bei der Aufreinigung von Biopolymeren aufweisen sollen.

So eignen sich die gegenwärtig für die 96-well-Platten gängigen Glasfaser- bzw. Silikamembranen nur bedingt für den Einsatz in 384-well-Platten, da die Filter- bzw. Trennfläche zu klein würde, um befriedigende Wirkungsgrade und Bindekapazitäten zu erzielen. Darüber hinaus sind neben dem erhöhten Herstellungsaufwand die ausgestanzten Miniaturmembranen oft zu dünn und damit zu instabil, um ohne Hilfsmittel wie z. B. einer zusätzlichen Bodenplatte und/oder anderen Stabilisierungsmitteln, in die Wells eingesetzt werden zu können, wodurch deutlich höhere Herstellungskosten entstehen.

Zudem verlieren herkömmliche Glasfaser- bzw. Silikamembranen bedingt durch Alterung schon nach kurzer Zeit stark an Effizienz, so dass sie sich nicht zur Lagerung über einen längeren Zeitraum eignen. Überdies ist eine Aktivierung der gealterten Membranen nicht nur sehr aufwendig, sondern vielfach auch nicht ausreichend genug, um reproduzierbare Ergebnisse zu erzielen.

In diesem Zusammenhang gewinnen derzeit im Bereich der Chromatographie monolithische Filter- bzw. Trennmaterialien bei der Herstellung von Kapillarsäulen immer mehr an Bedeutung. Hierbei wird nach der sogenannten Sol-Gel-Methode zunächst eine polymerisierbare niedermolekulare Verbindung (Sol) erzeugt, welche dann durch Polymerisationsreaktionen zu aggregiertem oder polymerisiertem Material (Gel) umgesetzt wird. Die Umsetzung erfolgt hierbei direkt in den entsprechenden Chromatographiesäulen. Diese Verfahren eignen sich jedoch ausschließlich für Kapillarsäulen mit einem sehr geringen Durchmesser (< 300 µm), da insbesondere anorganisches monolithisches Filter- bzw. Trennmaterial zumeist einer sehr starken Schrumpfung unterliegt, wodurch zwischen den monolithischen Filter- bzw. Trennmaterialien und den Trennvorrichtungen ein Totvolumen entsteht, das die Trenneigenschaften der Säulen zumeist sehr stark beeinträchtigt (siehe DE OS 100 28 572). Zur Beseitigung derartiger Totvolumina wird vorgeschlagen, die Trennvorrichtungen nach der Einpolymerisierung und der anschließenden Alterung und Trocknung der Fritten erneut mit Polymerisationslösung zu füllen und nochmals alle Schritte des Herstellungsverfahrens durchzuführen. Bevor jedoch eine erneute Einpolymerisierung durchgeführt werden kann, muss das gealterte Frittenmaterial erst mit einer Aktivierungslösung, wieder reaktiviert werden, was in der Summe zu einem sehr zeit- und kostenintensiven Herstellungsverfahren führt.

Ein weiterer Nachteil dieser mehrfach einpolymerisierten monolithischen Fritten ist zudem, dass diese durch ihren Aufbau weniger stabil sind und so mit steigendem Durchmesser der Filter- bzw. Trennvorrichtung auch der Abrieb des monolithischen Materials steigt. Insbesondere der Einsatz in Verbindung mit Druckvorrichtungen führt häufig zu Verunreinigungen durch verstärkten Abrieb, was wiederum in nachfolgenden Analyseschritten zu Beeinträchtigungen oder gar zu verfälschten Ergebnissen führen kann.

Aus dem Stand der Technik, wie in GB 150 1445, sind porösen Siliziumdioxid, enthaltenden monolithischen Formkörper bekannt. In diesem Dokument werden diese porösen monolithischen Formkörper aus einer Mischung Siliziumdioxid und einer Alkalisilikat enthaltende Lösung hergestellt. Zur Gelbildung wird dem Gemisch ein organisches Amid hinzugefügt.

Um die vorstehend aufgeführten Nachteile im Stand der Technik bekannter chromatographischer Trennmaterialien auszuräumen, liegt der vorliegenden Erfindung die **Aufgabe** zugrunde, ein stabiles Filter- bzw. Trennmaterial bereitzustellen, das eine selektive Aufreinigung und Trennung von Biopolymeren sowie eine effiziente und reproduzierbare Abarbeitung einer hohen Probenanzahl, insbesondere in automatisierten und/oder miniaturisierten Analysenverfahren ermöglicht. Das Filter- bzw. Trennmaterial soll zudem lagerungsstabil sowie nach langer Lagerung schnell einsatzbereit sein.

Diese Aufgabe wird **gelöst** durch die erfindungsgemäße Bereitstellung monolithischer Formkörper erhalten durch ein Verfahren enthaltend folgende Verfahrensschritte:
a) vorlegen von Siliciumdioxid in ein Reaktionsgefäß;
b) hinzufügen einer Lösung A, mindestens enthaltend ein oder mehrere Alkalisilikat(e) und Kaliumborat,
c) hinzufügen einer Lösung B, mindestens enthaltend ein oder mehrere Porogen(e) und Wasser,
d) hinzufügen zumindest eines organischen Amids und
e) trocknen des Reaktionsgemisches.

Erhalten werden die vorgenannten monolithischen Formkörper erfindungsgemäß durch ein Polymerisationsverfahren. Gemäß Verfahrensschritt a) wird hierbei zu Beginn ein kolloidales Kieselgel in ein Reaktionsgefäß vorgelegt. Nach einer bevorzugten Ausführungsform der Erfindung wird das Siliciumdioxid in Form von wässrigen Siliciumdioxid-Dispersionen bzw. Kieselgelen vorgelegt. Dabei können verschiedene handelsübliche Siliciumdioxid-Dispersionen verwendet werden, die sich in der Teilchengröße, dem Gehalt an Siliciumdioxid und der Stabilisierungsart (z. B. in Ammoniak, Natronlauge etc. stabilisiert) unterscheiden. Neben agglomerierten Kieselgelen können erfindungsgemäß auch kolloidale Kieselgele verwendet werden. Agglomeriert im Sinne der Erfindung bedeutet, dass vernetztes, nichtporöses, sphärisches Siliciumdioxid, mit einem mittleren Teilchendurchmesser von etwa 40nm, in Wasser vorliegt. Gemäß einer besonders bevorzugten Ausführungsform der Erfindung wird das Siliciumdioxid in Form von wässrigen kolloidalen Dispersionen kleiner Siliciumdioxid-Partikel vorgelegt. Es handelt sich hierbei um mono- oder polydisperse kolloidale Siliciumdioxid-Dispersionen, wie beispielsweise Ludox (W. R. Grace & Co., Columbia, US), oder Levasil (Bayer AG, Leverkusen, DE) etc., wobei kolloidal im Sinne der Erfindung bedeutet, dass in Wasser nichtvernetzte individuelle, sphärische Siliciumdioxid-Partikel vorliegen. Vorzugsweise enthält eine derartige kolloidale Dispersion 30-50 Gew.-%, bevorzugt 40-45 Gew.-% Siliciumdioxid-Partikel, mit einem mittleren Partikeldurchmesser von 5-100 nm, bevorzugt 10-40 nm, besonders bevorzugt 15-25nm.

Gemäß Verfahrensschritt b) des erfindungsgemäßen Verfahrens wird zunächst zum vorgelegten Siliciumdioxid eine Lösung A hinzugefügt. Diese enthält zumindest ein oder mehrere Alkalisilikat(e) und handelsübliches Kaliumborat (Honeywell Special Chemicals GmbH, Seelze, DE). Wie sich überraschenderweise herausstellte, führt insbesondere der Zusatz von Kaliumborat im erfindungsgemäßen monolithischen Formkörper zu verbesserten Bindungseigenschaften an den Porenoberflächen der Mesoporen und damit verbunden zu einer höheren Ausbeute an isolierten Biopolymeren. Um jedoch Kaliumborat im Reaktionsgemisch in Lösung zu bringen, wird dieses vorzugsweise in einer Alkalisilikat-Lösung gelöst. Unter Alkalisilikaten im Sinne der Erfindung werden Alkalisalze der Kieselsäure, insbesondere Natrium- oder Kaliumsilikate verstanden. Nach einer bevorzugten Ausführungsform der Erfindung werden zur Herstellung der Lösung A 0,1 bis 4 Gew.-%, bevorzugt 0,5 bis 2 Gew.-%, besonders bevorzugt 0,5 bis 1 Gew.-% Kaliumborat (bezogen auf das gesamte Reaktionsgemisch) vorzugsweise in einer handelsüblichen farblosen, kolloidalen Kaliumsilikat-Lösung, wie z. B. Kaliumsilikat 28°/30° Be (28/30 Baumé Grade, dies entspricht einer Dichte von 1240/1261 Kg/m³ (1,240/1,261 g/cm³), der Cognis Deutschland GmbH & Co. KG, Düsseldorf, DE, mit einem bevorzugten Siliciumdioxidgehalt von ca. 20,5 %, gelöst.

Um ferner eine größere mechanische Stabilität der erfindungsgemäßen monolithischen Formkörper zu erreichen, werden permanent makroporöse Polymere benötigt. Diese werden durch Anwesenheit geeigneter Porogene in der dispersen Phase gebildet. In einem weiteren Verfahrensschritt c) wird daher eine Lösung B, mindestens enthaltend ein oder mehrere Porogen(e) und Wasser, hinzugegeben. Als zuzusetzende porenbildende Substanzen (sogenannte Porenbildner oder Porogene) werden vorteilhafterweise wasserlösliche chemische Verbindungen verwendet. Hierbei eignen sich besonders gut wasserlösliche oder mit Wasser mischbare Tenside und/oder Emulgatoren. Derartige Porenbildner sind an sich bekannt. Bevorzugt sollten die erfindungsgemäß verwendeten Porogene thermodynamisch gute Lösungsmittel für das Monomer, aber schlechte Lösungsmittel für das Polymer sein, da diese zu einer sehr späten Phasenseparation führen. Hierdurch wird vorteilhafterweise die Homogenität des Reaktionsgemisches gewährleistet, was zur Herstellung von monolithischen Formkörpern mit sehr stabilen durchlässigen Membranen führt. Wobei durch die Zugabe der Porogene in erster Linie Membranen aus miteinander verbundenen kontinuierlichen Makroporen erzeugt werden, während die in den Wänden der Makroporen befindlichen Mesoporen durch das zugesetzte Kolloid gebildet werden.

Gemäß einer bevorzugten Ausführungsform der Erfindung werden zur Herstellung der Lösung B Polyalkohole als Porogene eingesetzt. Besonders geeignet sind hierbei Ethylenglykol, Diethylenglykol, Glycerin und/oder Diglycerin; oder auch Polypropylenglykol (PPG) und/oder Polyethylenglykol (PEG). Wobei alle vorgenannten Verbindungen einzeln oder auch in Mischungen vorliegen können.

Überraschenderweise kann durch die Zugabe von einem oder mehreren der vorgenannten in Wasser gelösten Porogen(en) die Stabilität der gebildeten erfindungsgemäßen monolithischen Formkörper deutlich erhöht werden. Hierbei hat das Volumen des Wassers (destilliert oder voll-entsalzt) einen großen Einfluss auf die Porenbildung. Vorteilhafterweise werden entsprechend der eingesetzten Porogene etwa 1 bis 4 ml Wasser, vorzugsweise 2 bis 3 ml Wasser zum Lösen der Porogene bzw. zur Herstellung von 5 - 40 %igen, vorzugsweise 10 - 20 %igen, Porogen-Lösungen verwendet.

Als ganz besonders vorteilhaft hat sich in diesem Zusammenhang die Verwendung einer Mischung aus PEG (z. B. PEG 3000 / Fluka, Buchs, CH) und Glycerin (Merck KGaA, Darmstadt, DE) bzw. Diglycerin (Fluka, Buchs, CH) mit Wasser herausgestellt. Die derart hergestellten monolithischen Formkörper weisen Poren mit einem optimalen mittleren Porendurchmesser und einer engen Porengrößenverteilung auf. Dies führt vorteilhafterweise zu einer Erhöhung der spezifischen Oberfläche und damit verbunden zu einer Steigerung der Bindungskapazitäten der erfindungsgemäßen Monolithe. Zudem kann durch die Zugabe von Glycerin und/oder Diglycerin ein Abrieb des gebildeten monolithischen Formkörpers, beispielsweise während eines Filtrationsvorgangs etc., vor allem bei einem zusätzlichen Einsatz einer Druckvorrichtung, deutlich verringert oder gar vermieden werden. Ferner führt die Erhöhung der Menge an Glycerin zu einer gleichmäßigeren Struktur der erfindungsgemäßen Monolithe.

Wie bereits aus gängigen Sol-Gel-Verfahren bekannt ist, wird dem Reaktionsgemisch (Sol) zum Starten der Gelbildung, d. h. zum Übergang der Sol-Form des Reaktionsgemisches in die Gel-Form, als Initiator eine pH-Wert senkende Substanz, wie z. B. eine organische oder anorganische Säure, hinzugegeben. Organische oder anorganische Säuren haben jedoch den Nachteil, dass sie eine sehr schnelle Absenkung des pH-Wertes verursachen, was eine umgehende Gelbildung zur Folge hat, die je nach Form und Größe des zu bildenden monolithischen Formkörpers ungleichmäßig oder gar unvollständig sein kann. Insbesondere die Überführung des Reaktionsgemisches in entsprechende formgebende Vorrichtungen erfordert eine zeitverzögerte Ausbildung des Gels. Unter formgebenden Vorrichtungen im Sinne der Erfindung werden zum einen handelsübliche, für die Aufreinigung und Trennung von Biopolymeren verwendete Vorrichtungen, wie beispielsweise Spinsäulen, multi-well-Platten, Pipetten-Tips etc., verstanden, und zum anderen Formvorrichtungen zur Herstellung von Fritten, Pellets oder allen anderen denkbaren Formen des monolithischen Filter- bzw. Trennmaterials wie (beispielsweise Kegel, Zylinder etc.).

Nach einer bevorzugten Ausführungsform der Erfindung wird dem Reaktionsgemisch zum Starten der Polykondensationsreaktion eine unter basischem Einfluss thermisch zersetzbare, niedermolekulare Verbindung zugesetzt, die durch ihre Hydrolyse den pH-Wert im Reaktionsgemisch erniedrigt. Es wurde überraschenderweise festgestellt, dass insbesondere die Verwendung von organischen Amiden eine vorteilhafte, gleichmäßige und langsame Gelbildung ermöglicht. Daher wird in einer besonders bevorzugten Ausführungsform der Erfindung gemäß Verfahrensschritt d) dem Reaktionsgemisch nachfolgend langsam zumindest ein organisches Amid (wie beispielsweise Polyacrylamid, Acetamid, Harnstoff, Formamid etc.) hinzugegeben. Ganz besonders vorteilhaft ist in diesem Zusammenhang der Einsatz von handelsüblichem Formamid und/oder Harnstoff (Merck KGaA, Darmstadt, DE), da sich diese Verbindungen unter Bildung niedermolekularer Verbindungen zersetzen, die während des Herstellungsverfahrens entweichen oder im Nachhinein zumindest leicht aus dem gebildeten monolithischen Formkörper entfernt werden können und somit bei den mit den erfindungsgemäßen Monolithen durchgeführten Analysen nicht zu Störungen oder zu verfälschten Ergebnissen führen können.

Ein weiterer großer Vorteil dieser Verbindungen ist, dass ein mit Formamid und/oder Harnstoff versetztes Reaktionsgemisch innerhalb von 30 min nach deren Zugabe noch ohne nachteilige Auswirkungen auf den Gelbildungsprozess in entsprechende formgebende Vorrichtungen eingebracht werden kann.

Nach erfolgter Überführung bzw. Einpolymerisierung des Reaktionsgemisches in die je nach dem späteren Verwendungszweck gewünschte formgebenden Vorrichtungen, werden die Gelformen gemäß Verfahrensschritt e) zur Ausbildung der erfindungsgemäßen monolithischen Formkörper getrocknet. Die Trocknung erfolgt etwa 12 bis 25 h, vorzugsweise 17 bis 22 h, besonders bevorzugt bis zu 20 h, bei 30 bis 80°C, vorzugsweise bei 40 bis 60°C in einer entsprechenden Trocknungsvorrichtung, wie beispielsweise einem Ofen, einem Trockenschrank oder einer Trockenkammer etc.

Vorteilhafterweise wird das Reaktionsgemisch während der Verfahrensschritte a) bis d), beispielsweise durch Schütteln, Rühren, Vortexen oder Ultraschalleinsatz etc., ständig in Bewegung gehalten, um eine homogene Verteilung der Edukte im Reaktionsgemisch zu erzielen und damit verbunden eine gleichmäßige Strukturbildung der erfindungsgemäßen monolithischen Formkörper zu gewährleisten.

Aufgrund der erfindungsgemäßen Verfahrensdurchführung ist es somit möglich monolithische Filter- bzw. Trennmaterialien mit gezielt eingestellten Porengrößen sowie einer gezielten eingestellten Porengrößenverteilung herzustellen. Diese zeigen deutliche Vorteile bei der Verwendung als chromatographisches Trennmaterial zur Aufreinigung und Trennung von Biopolymeren. Insbesondere gegenüber herkömmlichen Filter- bzw. Trennmaterialien, wie Glasfasermembranen, zeichnen sich die erfindungsgemäßen Monolithe durch höhere Stabilität und Bindekapazitäten aus.

Überraschenderweise wurden diese vorteilhaften Eigenschaften der erfindungsgemäß gebildeten monolithischen Formkörper durch die Einbringung von Bor - in der Form von Kaliumborat - in das Filtermaterial noch verstärkt. Insbesondere die Ausbildung einer vorteilhaften Porengröße der Mesoporen kann bei der Herstellung der erfindungsgemäßen monolithischen Formkörper durch die Zugabe von Borverbindungen beeinflusst bzw. sogar gesteuert werden.

Besonders vorteilhafte Filter- bzw. Trenneigenschaften, wie eine deutliche Erhöhung der Bindekapazität, zeigten erfindungsgemäße monolithische Formkörper, die einen Gewichtsanteil von 0,1 bis 0,3 %, Bor, vorzugsweise von 0,15 bis 0,25 % Bor, bzw. besonders bevorzugt von 0,18 bis 0,22 % Bor aufwiesen.

Ein weiterer Vorteil des vorstehend erläuterten Verfahrens besteht darin, dass die zur Herstellung der erfindungsgemäßen monolithischen Formkörper erforderlichen Edukte einfach und schnell in sehr kleine formgebende Vorrichtungen, wie beispielsweise Pipetten-Tips oder 384-multi-well-Platte etc., eingebracht und die monolithischen Formkörper an Ort und Stelle ausgebildet werden können.

Darüber hinaus erweist sich auch der Einsatz unterschiedlichster formgebender Vorrichtungen effektiv und kostengünstig. Im Gegensatz zu herkömmlichen Glasfaserplatten (insbesondere im 384-multi-well-Format) können beispielsweise erfindungsgemäß hergestellte Formkörper jedweder Struktur ohne Spannringe und Bodenplatten preiswerter und schneller hergestellt werden. Zudem können die erfindungsgemäß hergestellten Formkörper nach Gebrauch leicht durch neue ersetzt werden, was weiterhin zu einer Einsparung an Materialkosten führt. Darüber hinaus ist gerade die Pellet-Herstellung für einen schnellen und flexiblen Einsatz der erfindungsgemäßen monolithischen Formkörper zu bevorzugen. Sie haben gleich gute und reproduzierbare Trenneigenschaften und lassen sich zudem im Durchmesser und der Dicke leicht variieren.

Ferner wurde im Rahmen der vorliegenden Erfindung überraschend festgestellt, dass sich die erfindungsgemäßen monolithischen Formkörper ebenso als chromatographisches Trennmaterial zur selektiven Trennung von Biopolymeren eignen. Dies wird zwar in erster Linie durch die gezielte Einstellung der Porengröße der Mesoporen erreicht. Optional wird in einer weiteren Ausgestaltung der Erfindung jedoch zusätzlich noch die Bindungschemie innerhalb der Mesoporen dahingehend beeinflusst, dass ein oder mehrere Übergangsmetall(e) in die Struktur des erfindungsgemäßen monolithischen Formkörpers eingebaut oder an der Oberfläche der im erfindungsgemäßen monolithischen Formkörper gebildeten Poren angelagert wird/werden. Hierfür wird vorab zum erfindungsgemäßen Verfahren eine wässrige Lösung C enthaltend ein oder mehrere Übergangsmetallsalze hergestellt.

Zur Einbringung der Übergangsmetalle in den erfindungsgemäßen monolithischen Formkörper wird die Lösung C zu Beginn des erfindungsgemäßen Verfahrens der Lösung A zugemischt. Wie sich herausstellte eignen sich insbesondere wässrige Lösungen von Kupfer-, Zink- und/oder Mangan-Salzen, vorzugsweise Lösungen mit 0,2 bis 1,7 Gew.-% Kupfersulfat oder 0,8 bis 2,9 Gew.-% Kaliumpermanganat.

Zur Anlagerung der Übergangsmetalle insbesondere an die Oberfläche der im erfindungsgemäßen monolithischen Formkörper gebildeten Mesoporen wird das getrocknete Filter- bzw. Trennmaterial mit der Lösung C getränkt und ca. 18h bei Raumtemperatur getrocknet. Alternativ kann je nach Materialeigenschaften eine schnellere Trocknung bei 130°C erfolgen (s. Beispiel 1b und 3). Bei den eingesetzten Lösungen handelt es sich im Wesentlichen um Lösungen von Zirkon- und/oder Titan-Salzen, vorzugsweise um 1 - 10 %ige ZrCl₄ oder TiCl₄ Lösungen, wobei diese Verbindungen jedoch in anderen gängigen Lösungsmitteln (z. B. Diethylether, THF etc.) gelöst werden.

Zusammenfassend ergibt sich, dass gemäß einer bevorzugten Ausführungsform der vorliegenden Erfindung die erfindungsgemäßen monolithischen Formkörper aus einem Reaktionsgemisch mit der folgenden Zusammensetzung (Angaben in Gewichtsprozent) hergestellt werden:
35 bis 85 % Kaliumsilikat,
0,1 bis 25 % zumindest eines kolloidalen Kieselgels,
0,1 bis 30 % Wasser,
0,1 bis 12 % zumindest eines Porogens,
6 bis 12 % zumindest eines organischen Amids,
0,1 bis 5 % Kaliumborat,
0 bis 10 % eines Salzes zumindest eines Übergangsmetalls.

Besonders bevorzugt weist die Reaktionsmischung folgende Zusammensetzung (Angaben in Gewichtsprozent) auf:
50 bis 60 % Kaliumsilikat (28/30),
5 bis 10 % zumindest eines kolloidalen Kieselgels,
10 bis 25 % Wasser,
3 bis 6 % Polyethylenglykol und/oder Diethylenglykol,
5 bis 10 % Formamid und/oder Harnstoff,
0,5 bis 2 % Kaliumborat,
0 bis 2 % Glycerin und
0 bis 10 % eines Salzes zumindest eines Übergangsmetalls.

Nachfolgend soll nun die vorliegende Erfindung anhand von beigefügten Zeichnungen sowie weiteren experimentelle Einzelheiten in den Ausführungsbeispielen näher erläutert werden.

Es zeigt:
- Fig. 1: die Struktur des erfindungsgemäßen monolithischen Formkörpers mit PEG als Porogen unter dem Elektronenmikroskop ;
- Fig. 2: die Struktur des erfindungsgemäßen monolithischen Formkörpers ohne Porogene unter dem Elektronenmikroskop ;

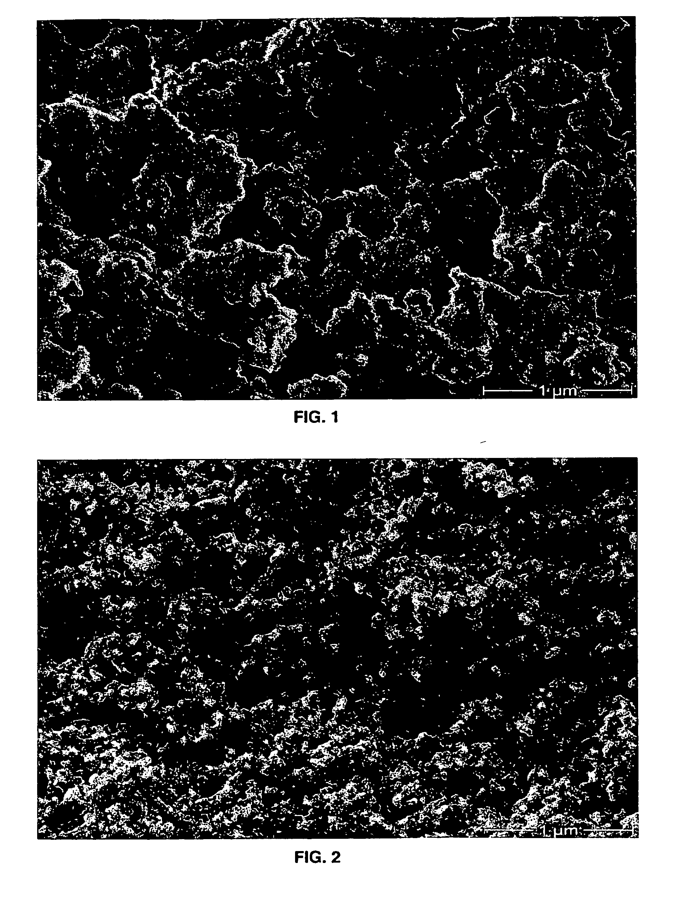

Den in Fig. 1 und Fig. 2 gezeigten Aufnahmen des erfindungsgemäßen monolithischen Formkörpers ist deutlich zu entnehmen, dass sich durch die Zugabe von Polyethylenglykol zum Reaktionsgemisch wesentlich größere Makroporen ausbilden, was auf eine verbesserte Durchflussrate hinweist. Die Bestimmung der Porengrößen der Makro- und Mesoporen und ihrer entsprechenden spezifischen Oberflächen erfolgt mittels Elektronenmikroskopie. Die spezifische Oberfläche der Proben liegt bei etwa 10m²g⁻¹.

### Ausführungsbeispiele

### Beispiel 1: Allgemeine Herstellung der erfindungsgemäßen Monolithe

Vorab wurden eine Lösung A und eine Lösung B hergestellt (s. Tabelle 1). In einem 50 ml PE-Gefäß wurden dann unterschiedliche Mengen eines handelsüblichen kolloidalen Siliciumdioxids vorgelegt, in das zur Solbildung langsam Lösung A und dann Lösung B unter ständigem Schütteln hinzupipettiert wurden. In das leicht trübe, aber niederschlagsfreie Reaktionsgemisch (RG) wurden zur Gelbildung unterschiedliche Mengen an Formamid (siehe Tabelle 1) zugegeben. Nachfolgend wurden die Reaktionsgemische innerhalb von 30 Minuten nach der Zugabe des organischen Amids zu je 150 µl entweder (1) in handelsübliche Spinsäulen oder (2) in die Bohrungen einer handelsüblichen Lochplatte pipettiert, deren Auslassöffnungen vorab (beispielsweise durch einen Klebestreifen etc.) verschlossen wurden. Nach dem Einpolymerisieren wurden bei einem Teil der formgebenden Vorrichtungen auch die oberen Einlassöffnungen abgedeckt. Abschließend wurden die formgebenden Vorrichtungen 20h bei 40 °C in einem Trockenschrank erwärmt.

Es wurde festgestellt, dass durch Abdecken der formgebenden Vorrichtungen während der Polykondensation und/oder des Trocknungsvorgangs eine langsamere Durchtrocknung der erfindungsgemäßen monolithischen Formkörper erfolgte, die eine gleichmäßigere Ausbildung der Monolithstruktur noch verstärkte.

### a) Verwendung unterschiedlicher formgebender Vorrichtungen

(1) Die in den Spinsäulen erhaltenen Monolithe füllten den unteren Bereich der Spinsäulen vollständig aus. Durch Einbringen von Spannringen wurden die Monolithe in den Spinsäulen fixiert und direkt zur Isolation von genomischer DNA sowie RNA aus Blutproben, Ratten-Nierengewebe und Ratten-Hirngewebe verwendet.
(2) Die aus den Lochplatten erhaltenen monolithischen Pellets wurden der Lochplatte entnommen und in den Spinsäulen fixiert. Die derart präparierten Spinsäulen wurden direkt zur Isolation von genomischer DNA sowie RNA aus Blutproben, Ratten-Nierengewebe und Ratten-Hirngewebe verwendet. Um einen besonders guten Halt der Pellets in den Spinsäulen zu gewährleisten, wurden zur Herstellung der Pellets Lochplatten verwendet, die einen größeren Durchmesser als den Innendurchmesser der Spinsäulen aufwiesen. Dies machte den Einsatz von Spannringen überflüssig und das Verfahren somit kostengünstiger.

### b) Trockenzeiten der erfindungsgemäßen Monolithe

Zur Überprüfung der Trockenzeiten der erfindungsgemäßen Monolithe wurde das hergestellte Gel in die formgebende Vorrichtungen verbracht und diese im Trockenschrank bei ca. 40°C erwärmt. Dann wurde stündlich kontrolliert, wie lange die sich bildenden monolithischen Fritten (Formkörper) zum Trocknen benötigen. Anhand der durchgeführten Versuchsreihe konnte gezeigt werden, dass die erfindungsgemäßen Monolithe nach einer Reaktionszeit von ca. 2 h aushärten und eine gewisse Stabilität aufweisen. Sie waren jedoch noch nicht stabil genug, um den Silikaabrieb derart zu unterbinden, dass mit ihnen Erfolg versprechende Analysenergebnisse hätten erzielt werden können. Die volle Kapazität der Fritten war erst nach 17 bis 20 h gegeben.

Ferner wurde festgestellt, dass die Trocknungszeiten bei der Schrumpfung eine Rolle spielen können. Hohe Temperaturen und schnelle Trocknungszeiten bewirken, dass die Schrumpfung geringer ausfällt als langsames Trocknen bei niedrigen Temperaturen. Die Grenze der Trocknungstemperatur wird oft vom Material des formgebenden Materials bestimmt. D. h. werden die noch nicht getrockneten Formkörper aus der formgebenden Vorrichtung entnommen sind Temperaturen bis 400°C anwendbar.

Des Weiteren wurde untersucht, ob und in wie weit eine möglicherweise auftretende Phasenseparation des Reaktionsgemisches während der Trocknung beispielsweise mittels Mikrowellenbestrahlung oder dem Einsatz von Thermomixern vermieden werden kann, da es sich gezeigt hatte, dass durch permanentes Schütteln während der Gelierung, ein Entmischen der Reaktionsgemische verhindert werden kann. Dies führt vorteilhafterweise zu einer wesentlich homogeneren Struktur der erfindungsgemäßen Monolithe und damit zu einer erhöhten Kapazität. Als besonders vorteilhaft stellte sich heraus, die Proben in einem Thermomixer bei 30 bis 70°C, vorzugsweise 40 bis 60°C, vollständig zu polykondensieren.

Um besonders bei sensiblen Analysenverfahren sicher zu gehen, dass aus den erfindungsgemäßen monolithischen Formkörpern während eines Trennungsschrittes keine herstellungsbedingten Verunreinigungen die Analysenergebnisse verfälschen, wurden die gebildeten monolithischen Formkörper nachfolgend optional noch ein oder mehrere Male mit destilliertem Wasser gespült und dann bei 40 bis 120°C getrocknet.

### c) Vergleich erfindungsgemäß hergestellter Monolithe

Um die erfindungsgemäß hergestellten Monolithe miteinander vergleichen zu können, wurden aus einer Reihe von unterschiedlich zusammengesetzten Reaktionsgemischen Monolithe hergestellt und auf ihre Eigenschaften hin untersucht. Diese nachfolgende Auswahl ist beispielhaft und dient zur allgemeinen Darstellung der besonderen Eigenschaften der erfindungsgemäßen Monolithe.

**Tabelle 1: Zusammensetzungen der Reaktionsgemische zur Herstellung der erfindungsgemäße Monolithe**

| **Reaktionsgemisch (RG)** | **Lösung A** | **Lösung B** | **Siliziumdioxid** (Ludox AS 40, Partikelgröße 20 nm, 40wt% SiO₂ | **Formamid** |
|---|---|---|---|---|
| **RG 1** | 32,7 mg Kaliumborat in 4 ml Kaliumsilikat gelöst | 400 mg PEG 3000 in 2 ml Wasser gelöst | 0,5 ml | 0,5ml |
| **RG 2** | 65,45 mg Kaliumborat in 4 ml Kaliumsilikat gelöst | 400 mg PEG 3000 in 2 ml Wasser gelöst | 0,5 ml | 0,5 ml |
| **RG 3** | 32.7 mg Kaliumborat in 3,5 ml Kaliumsilikat gelöst | 400 mg PEG 3000 in 2 ml Wasser gelöst | 1 ml | 0,5 ml |
| **RG 4** | 65,45 mg Kaliumborat in 3,5 ml Kaliumsilikat gelöst | 400 mg PEG 3000 in 2 ml Wasser gelöst | 1 ml | 0,5 ml |
| **RG 5** | 4 ml Kaliumsilikat | 400 mg PEG 3000 in 2 ml Wasser gelöst | 0,5 ml | 0,5 ml |
| **RG 6** | 65,45 mg Kaliumborat in 4 ml Kaliumsilikat gelöst | 400 mg PEG 3000 in 2 ml Wasser gelöst | 0,5 ml | 0,6 ml |
| **RG 7** | 65,45 mg Kaliumborat in 4 ml Kaliumsilikat gelöst | 400 mg PEG 3000 in 2 ml Wasser gelöst | 0,5 ml | 0,7 ml |
| **RG 8** | 65,45 mg Kaliumborat in 4 ml Kaliumsilikat gelöst | 360 mg PEG 3000 und 40 mg Glycerin in 2 ml Wasser gelöst | 0,5 ml | 0,5 ml |
| **RG 9** | 65,45 mg Kaliumborat in 4 ml Kaliumsilikat gelöst | 320 mg PEG 3000 und 80 mg Glycerin in 2 ml Wasser gelöst | 0,5 ml | 0,5 ml |
| **RG 10** | 65,45 mg Kaliumborat in 4 ml Kaliumsilikat gelöst | 280 mg PEG 3000 und 120 mg Glycerin in 2 ml Wasser gelöst | 0,5 ml | 0,5 ml |
| **RG 11** | 65,45 mg Kaliumborat in 4 ml Kaliumsilikat gelöst | 360 mg PEG 3000 und 40 mg Diglycerin in 2 ml Wasser gelöst | 0,5 ml | 0,5 ml |
| **RG 12** | 65,45 mg Kaliumborat in 4 ml Kaliumsilikat gelöst | 320 mg PEG 3000 und 80 mg Diglycerin in 2 ml Wasser gelöst | 0,5 ml | 0,5 ml |
| **RG 13** | 65,45 mg Kaliumborat in 4 ml Kaliumsilikat gelöst | 280 mg PEG 3000 und 120 mg Diglycerin in 2 ml Wasser gelöst | 0,5 ml | 0,5 ml |
| **RG 14** | 65,45 mg Kaliumborat in 4 ml Kaliumsilikat gelöst | 200 mg PEG 3000 in 1 ml Wasser gelöst | 0,5 ml | 0,5 ml |

Neben Tests bezüglich Stabilität und Abrieb sowie optischen Prüfungen auf Farbe und Form wurden vor allem Kapazitätstests durchgeführt. Hierzu wurde aus unterschiedlichen biologischen Proben insbesondere genomische Desoxyribonukleinsäure (gDNA) und/oder Ribonukleinsäure (RNA) aufgereinigt. Die Aufreinigung erfolgte hierbei mit den erfindungsgemäß hergestellten monolithischen Säulenmaterialen sowie als Referenz mit herkömmlichem Glasfaser-Säulenmaterial. Vorzugsweise wurden als Referenzmaterial RNeasy bzw. Qiaprep (QIAGEN GmbH, Hilden, DE) verwendet. Ferner erfolgte die Aufreinigung je nach Probenmaterial gemäß den dafür gängigen Aufreinigungsprotokollen, wie beispielsweise dem *"QIAamp DNA Blood Mini Protokoll"* oder dem *"RNeasy Mini Protokoll" etc.*

Anhand von Kapazitätsmessungen mit aus den Reaktionsgemischen RG 1 bis 5 hergestellten Monolithen konnten beispielsweise Aussagen über den Einfluss einzelner Substanzen gemacht werden. So trägt beispielsweise gemäß Tabelle 2 der Einsatz von Kaliumborat erheblich zur Steigerung der Kapazität der erfindungsgemäßen Monolithe bei.

**Tabelle 2: Einfluss von Kaliumborat**

| **Säulenmaterial aus RG** | **Kapazität in *µ*g** |
|---|---|
| RG 1/1 | 7,14 |
| RG 1/2 | 7,95 |
| RG 2/1 | 8,15 |
| RG 2/2 | 8,63 |
| RG 3/1 | 6,64 |
| RG 3/2 | 5,56 |
| RG 4/1 | 5,68 |
| RG 4/2 | 4,96 |
| RG 5/1 | 0,36 |
| RG 5/2 | 0,73 |
| QIAQuick | 6,45 |

Es war festzustellen, dass durch den Einsatz von Kaliumborat in den erfindungsgemäßen Monolithen eine Steigerung der Kapazität gegenüber den Kapazitäten herkömmlicher Spinsäulenmaterialien von bis zu 30 % und mehr erreicht wurde.

Ebenso konnte gezeigt werden, dass die Eigenschaften der erfindungsgemäßen Monolithe durch die Änderung der Menge an Formamid im Reaktionsgemisch weiter verbessert werden konnten. So konnte durch die Erhöhung der Formamidmenge ohne Kapazitätsverluste der Abrieb ganz vermieden werden.

**Tabelle 2: Anderung der Formamidmengen**

| **Säulenmaterial aus RG** | **Kapazität in µg** |
|---|---|
| RG 2/1 | 20,7 |
| RG 2/2 | 29,6 |
| RG 6/1 | 27,4 |
| RG 6/2 | 26,7 |
| RG 7/1 | 26,8 |
| RG 7/2 | 27,6 |
| QIAQuick | 16,1 |

Aber auch die Variation unterschiedlicher Mengen an Porogenen trug zur Verbesserung der Monolithstruktur bei. Es stellte sich heraus, dass durch den Zusatz, insbesondere von Glycerin und/oder Diglycerin, die Monolithstruktur homogener wurde. Zudem trägt der Zusatz von Glycerin und/oder Diglycerin ebenfalls zur Vermeidung von Abrieb bei.

**Tabelle 4: Einfluss von Glycerin**

| **Säulenmaterial aus RG** | **Kapazität in µg** |
|---|---|
| RG 2/1 | 22,9 |
| RG 2/2 | 21,3 |
| RG 8/1 | 22,6 |
| RG 8/2 | 22,6 |
| RG 9/1 | 24,3 |
| RG 9/2 | 22,8 |
| RG 10/1 | 20,2 |
| RG 10/2 | 23,8 |
| QIAQuick | 13,1 |

**Tabelle 5: Einfluss von Diglycerin**

| **Säulenmaterial aus RG** | **Kapazität in *µ*g** |
|---|---|
| RG 2/1 | 27,3 |
| RG 2/2 | 25,4 |
| RG 11/1 | 22,3 |
| RG 11/2 | 11,0 |
| RG 12/1 | 11,3 |
| RG 12/2 | 21,1 |
| RG 13/1 | 21,6 |
| RG 13/2 | 20,8 |
| QIAQuick | 15,6 |

Als ein weiterer Vorteil einer homogeneren Monolithstruktur stellte sich heraus, dass der Einsatz von Porogenen zudem eine deutliche Erhöhung der RNA-Ausbeute bedingt (siehe auch Beispiel 2).

### Beispiel 2: Herstellung RNA selektiver Monolithe

### a) Herstellung RNA selektiver Monolithe enthaltend Kupfersulfat

Zur Herstellung einer Lösung C wurden 15,9 mg Kupfersulfat (Fluka, Buchs, CH) und 39,8 mg Kaliumtartrat (Fluka, Buchs, CH) in 0,5ml Wasser gelöst und langsam mit 15,0 mg Kaliumhydroxid (Fluka, Buchs, CH) versetzt. Die entstandene blaue Suspension wurde unter vortexen in eine wie unter Beispiel 1 dargestellte Lösung A pipettiert. Es entstand eine klare blaue Lösung. Diese wurde langsam in ein 50 ml Polyethylengefäß zu 0,5 ml kolloidalem Siliziumdioxid hinzupipettiert. Nachfolgend wurde ebenfalls unter vortexen eine Lösung B, enthaltend 360 mg PEG 3000 und 40 mg Glycerin gelöst in 2ml Wasser, langsam hinzugegeben. Nach Zugabe von 0,5 ml Formamid wurde die Lösung zu je 100 µl in entsprechend präparierte Spinsäulen pipettiert und im Trockenschrank 20h auf 40°C erwärmt. Eine gDNA-freie und reproduzierbare RNA-Isolation aus Gewebeproben wurde erzielt.

Probe 1: Nach dem Fibrous-Tissue Protokoll (QIAGEN GmbH, Hilden, DE) wurde der Gehalt an RNA in 20 mg Nierengewebe einer Ratte bestimmt:
Ausbeute:
   a) 20 µg Gesamt-RNA je 10 mg Gewebe. (Keine Kontamination an gDNA)
   b) 19 µg Gesamt-RNA je 10 mg Gewebe. (Keine Kontamination an gDNA)
   c) 19 µg Gesamt-RNA je 10 mg Gewebe. (Keine Kontamination an gDNA)
   d) 20 µg Gesamt-RNA je 10 mg Gewebe. (Keine Kontamination an gDNA)

### b) Herstellung RNA selektiver Monolithe enthaltend Kaliumpermanganat

Zur Herstellung einer Lösung C wurden 0,0625 g Kaliumpermanganat (Fluka, Buchs, CH) in 0,5 ml VE-Wasser gelöst. Die Kaliumpermanganatlösung wurde unter vortexen in eine wie unter Beispiel 1 dargestellte Lösung A pipettiert. In einem 50 ml Polyethylengefäß wurden nachfolgend 0,5 ml eines kolloidalen Kieselgels vorgelegt und die obige Mischung aus Kaliumsilikat und Kaliumpermanganat langsam hinzupipettiert. Nachfolgend wurde ebenfalls unter vortexen eine Lösung B, enthaltend 360 mg PEG 3000 und 40 mg Glycerin in 2ml VE-Wasser hinzugegeben. Abschließend wurden sehr langsam 0,5 ml Formamid zugegeben und in entsprechend präparierte Spinsäulen pipettiert. Nach einer Trockenzeit von 20h bei 40°C im Trockenschrank konnten die entstandenen Monolithe zur Isolierung von RNA aus verschiedenen Geweben verwendet werden. Eine gDNA-freie und reproduzierbare RNA-Isolation aus Gewebeproben wurde erzielt.

Probe 2: Nach dem Lipid-Tissue Protokoll (QIAGEN GmbH, Hilden, DE) wurde der Gehalt an RNA in 40 mg Gerhirngewebe einer Ratte bestimmt:
Ausbeute:
   a) 7 µg Gesamt-RNA je 10 mg Gewebe. (Keine Kontamination an gDNA)
   b) 8 µg Gesamt-RNA je 10 mg Gewebe. (Keine Kontamination an gDNA)

### c) Herstellung RNA selektiver Monolithe durch nachträgliche Beschichtung

Zur Beschichtung der Oberflächen von wie im Beispiel hergestellten erfindungsgemäßen monolithischen Formkörpern aus RG 2 wurden die getrockneten Filter- bzw. Trennmateriaen mit zwei unterschiedlichen Lösungen getränkt. Zum einen wurden die monolithischen Formkörper für 18h in eine 5%ige Zirkoniumtetrachlorid / THF-Lösung (L1), und zum anderen in eine 5%ige Zirkonium(IV)-isopropoxide-isopropanol-Komplex / Ethanol-Lösung (L2) eingelegt.

Nach einer Trockenzeit von etwa 18h bei Raumtemperatur konnten die entstandenen Monolithe (M1 und M2) zur Isolierung von RNA aus verschiedenen Geweben verwendet werden. (Verglichen wurden M1 und M2 mit nicht beschichteten monolithischen Formkörpern aus RG 2 / M0.)

Probe 3: Nach dem RNeasy Fibrous-Tissue Protokoll (QIAGEN GmbH, Hilden, DE) wurde der Gehalt an RNA in 20 mg Nierengewebe einer Ratte bestimmt
(1). In einer zweiten Versuchdurchführung (2) wurde vor dem Waschschritt RW1 ein Waschschritt mit doppelt so viel GITC (1,8 M) durchgeführt, und in einer dritten Versuchsdurchführung (3) wurde nach dem Waschschritt RW1 ein Waschschritt mit halb so viel GITC (0,45 M) durchgeführt.

Ausbeute in µg: (je 10 mg Gewebe)

| | (1) | (2) | (3) | gDNA Kontaminationen |
|---|---|---|---|---|
| M0 | 18 | 16 | 14 | nachweisbar |
| M1 | 8 | 15 | 10 | nicht nachweisbar |
| M2 | 3 | 3 | 13 | sehr schwach nachweisbar |

Auch unter Verwendung unterschiedlicher Waschpuffer wurde eine selektive d. h. gDNA-freie RNA-Isolation aus Gewebeproben erzielt.

### Beispiel 3: Verschiedene Füllvolumina in den formgebenden Vorrichtungen

Neben 150 µl wurden vergleichsweise 100 µl des hergestellten Reaktionsgemisches RG 2 in Spinsäulen verbracht und 20 h bei 40°C im Trockenschrank erwärmt. Anschließend wurden die Kapazitäten der gebildeten erfindungsgemäßen monolithischen Formkörper, mit denen der QIAQuick Spinsäule (QIAGEN GmbH, Hilden, DE) verglichen.

**Tabelle 6: Unterschiedliche Füllvolumina**

| **Säulenmaterial aus RG** | **Kapazität in *µ*g** |
|---|---|
| RG 2a1 | 56,2 |
| RG 2a/2 | 52,3 |
| RG 2b/1 | 29,1 |
| RG 2b/2 | 24,5 |
| QIAQuick | 32,1 |

Es zeigte sich, dass trotz der Verringerung des eingesetzten Volumens die Spinsäulen mit dem monolithischen Formkörpern noch vergleichbare Kapazitäten zu denen der QIAQuick Spinsäule aufwiesen. Auch die Versuche mit 50 µl Füllvolumen und kleiner waren sehr erfolgreich, so dass vorteilhafterweise auch kleinere Aufreinigungsvorrichtungen, wie beispielsweise 384 multi-well-Platten, mit den erfindungsgemäßen monolithischen Formkörpern bestückt werden können.

Ferner konnte mit sinkendem Füllvolumen ein Abrieb des monolithischen Materials vollständig verhindert werden

Darüber hinaus konnte gezeigt werden, dass das monolithische Material wesentlich stabiler gegenüber gängigen Glasfaser- bzw. Silikamembranen ist, so dass insbesondere bei der Miniaturisierung der Filter- bzw. Trennmaterialien auf Hilfsmittel, wie beispielsweise zusätzliche Bodenplatten oder Spannringe verzichtet werden kann. Dies führt neben einer Verringerung der Materialkosten vorteilhafterweise auch zu einer schnelleren Herstellung der Filter- bzw. Trennmaterialien.

### Probe 4:

Es wurden jeweils 100 µl des Reaktionsgemisches RG 2 in Spinsäulen pipettiert. Die Spinsäulen wurden 20h bei 40 °C in einem Trockenschrank erwärmt. Es wurden Monolithe erhalten, welche die Spinsäule im unteren Bereich ausfüllten. Durch Einbringen eines Spannrings wurden die Monolithe in den Spinsäulen fixiert und direkt zur Aufreinigung von gDNA aus Blut verwendet. Hierbei wurden 200 µl Vollblut nach dem QIAamp DNA Blood Mini Protokoll (QIAGEN GmbH, Hilden, DE) aufgereinigt. Die notwendigen Reagenzien wurden ebenfalls aus dem QIAamp-Kit (QIAGEN GmbH, Hilden, DE) übernommen.
Ausbeute:
   a) 8,7 µg gDNA
   b) 10,4 µg gDNA,
   c) 8,5 µg gDNA,
   d) 10,5 µg gDNA,

### Beispiel 4: Alterung monolithischer Formkörper

Hierbei wurden erfindungsgemäße monolithische Formkörper (hergestellt aus dem Reaktionsgemisch RG 2) durch längere Standzeit im Trockenschrank gealtert. Von 30 hergestellten monolithischen Fritten wurden 15 Stück weitere 40h bei 60°C im Trockenschrank (Umluftstufe 3) getrocknet.

Optisch konnte kein Unterschied zwischen den Standardfritten und den zusätzlich getrockneten Fritte festgestellt werden. Zudem wiesen die Standardfritten auch nach längerer Lagerung bei Raumtemperatur keinerlei alterungsbedingte Kapazitätsverluste auf.

## Patentansprüche

1. Monolithischer Formkörper erhalten durch ein Verfahren enthaltend folgende Verfahrensschritte:
a) vorlegen von Siliciumdioxid in ein Reaktionsgefäß;
b) hinzufügen einer Lösung A, mindestens enthaltend ein oder mehrere Alkalisilikat(e) und Kaliumborat,
c) hinzufügen einer Lösung B, mindestens enthaltend ein oder mehrere Porogen(e) und Wasser,
d) hinzufügen zumindest eines organischen Amids und
e) trocknen des Reaktionsgemisches.

2. Monolithischer Formkörper erhalten durch ein Verfahren nach Anspruch 1, **dadurch gekennzeichnet, dass** dieser 0,1 bis 0,3 Gew.-%, Bor aufweist.

3. Monolithischer Formkörper erhalten durch ein Verfahren nach Anspruch 1, **dadurch gekennzeichnet, dass** dieser 0,15 bis 0,25 Gew.-% Bor aufweist.

4. Monolithischer Formkörper erhalten durch ein Verfahren nach Anspruch 1 **dadurch gekennzeichnet, dass** dieser 0,18 bis 0,22 Gew.-% Bor aufweist.

5. Monolithischer Formkörper erhalten durch ein Verfahren nach Anspruch 1, **dadurch gekennzeichnet, dass** als Porogene Polyalkohole, vorzugsweise Ethylenglykol, Diethylenglycol oder Polypropylenglykol, besonders bevorzugt Polyethylenglycol, Glycerin und Diglycerin sowie Mischungen daraus, eingesetzt werden.

6. Monolithischer Formkörper erhalten durch ein Verfahren nach Anspruch 1 **dadurch gekennzeichnet, dass** als organische Amide, Formamid und/oder Harnstoff, eingesetzt werden.

7. Monolithischer Formkörper erhalten durch ein Verfahren nach Anspruch 1, **dadurch gekennzeichnet, dass** das Reaktionsgemisch bis zu 20 h, bei 40°C bis 60°C getrocknet wird.

8. Monolithischer Formkörper erhalten durch ein Verfahren nach Anspruch 1, **dadurch gekennzeichnet, dass** der Lösung A eine wässrige Lösung C, enthaltend ein oder mehrere Übergangsmetallsalze, zugesetzt wird.

9. Monolithischer Formkörper gemäß Anspruch 8, **dadurch gekennzeichnet, dass** als Lösung C wässrige Lösungen von Kupfer-, Zink- und/oder Mangan-Salzen eingesetzt werden.

10. Monolithischer Formkörper nach einem der vorhergehenden Ansprüche, **dadurch gekennzeichnet, dass** das Reaktionsgemisch in Gewichstprozent
35 bis 85 % Kaliumsilikat,
0,1 bis 25 % zumindest eines kolloidalen Kieselgels,
0,1 bis 30 % Wasser,
0,1 bis 12 % zumindest eines Porogens,
6 bis 12 % zumindest eines organischen Amids,
0,1 bis 5 % Kaliumborat,
0 bis 10 % eines Salzes zumindest eines Übergangsmetalls aufweist.

11. Monolithischer Formkörper nach einem der Ansprüche 1 bis 9, **dadurch gekennzeichnet, dass** das Reaktionsgemisch in Gewichtsprozent bevorzugt
50 bis 60 % Kaliumsilikat einer Dichte von 1240 bis 1261 kg/m³ (28/30 Baumé Grade ).
5 bis 10 % zumindest eines kolloidalen Kieselgels,
10 bis 25 % Wasser,
3 bis 6 % Polyethylenglykol und/oder Diethylenglykol,
5 bis 10 % Formamid und/oder Harnstoff,
0,5 bis 2 % Kaliumborat,
0 bis 2 % Glycerin und
0 bis 10 % eines Salzes zumindest eines Übergangsmetalls aufweist.

12. Verwendung monolithischer Formkörper gemäß einem der vorhergehenden Ansprüche als chromatographisches Trennmaterial zur Aufreinigung und Trennung von Biopolymeren.

13. Verwendung monolithischer Formkörper gemäß einem der vorhergehenden Ansprüche als chromatographisches Trennmaterial zur selektiven Trennung von Biopolymeren.

## Claims

1. Monolithic shaped bodies obtained by a method comprising the following process steps:
a) placing silicon dioxide into a reaction vessel;
b) addition of a solution A comprising at least one or more alkali silicate(s) and potassium borate,
c) addition of a solution B comprising at least one or more porogen(s) and water,
d) addition of at least one organic amide and
e) drying the reaction mixture.

2. Monolithic shaped bodies obtained by a method according to claim 1, **characterised in that** they contain 0.1 to 0.3% by weight boron.

3. Monolithic shaped bodies obtained by a method according to claim 1, **characterised in that** they contain 0.15 to 0.25% by weight boron.

4. Monolithic shaped bodies obtained by a method according to claim 1, **characterised in that** they contain 0.18 to 0.22% by weight boron.

5. Monolithic shaped bodies obtained by a method according to claim 1, **characterised in that** polyalcohols, preferably ethylene glycol, diethylene glycol or polypropylene glycol, especially preferred polyethylene glycol, glycerol and diglycerol and their mixtures are used as porogens.

6. Monolithic shaped bodies obtained by a method according to claim 1, **characterised in that** formamide and/or urea are used as organic amides.

7. Monolithic shaped bodies obtained by a method according to claim 1, **characterised in that** the reaction mixture is dried for up to 20 h at 40°C to 60°C.

8. Monolithic shaped bodies obtained by a method according to claim 1, **characterised in that** an aqueous solution C comprising one or more transition metal salts is added to solution A.

9. Monolithic shaped bodies according to claim 8 **characterised in that** aqueous solutions of copper, zinc and/or manganese salts are used as solution C.

10. Monolithic shaped bodies according to one of the previous claims, **characterised in that** the reaction mixture is as percent by weight
35 to 85 % potassium silicate,
0.1 to 25 % of at least one colloidal silica gel,
0.1 to 30 % water,
0.1 to 12 % of at least one porogen,
6 to 12 % at least one organic amide,
0.1 to 5 % potassium borate,
0 to 10 % of a salt of at least one transition metal.

11. Monolithic shaped bodies according to claims 1 to 9, **characterised in that** the reaction mixture in percent by weight is preferably
50 to 60 % potassium silicate of a density of 1240 to 1261 kg/m³ (28/30 Baumé Grade),
5 to 10 % of at least one colloidal silica gel,
10 to 25 % water,
3 to 6 % polyethylene glycol and/or diethylene glycol,
5 to 10 % formamide and/or urea,
0.5 to 2 % potassium borate,
0 to 2 % glycerol and
0 to 10 % of a salt of at least one transition metal.

12. Use of monolithic shaped bodies according to one of the preceding claims as chromatographic separation material for the purification and separation of biopolymers.

13. Use of monolithic shaped bodies according to one of the preceding claims as chromatographic separation material for the selective separation of biopolymers.

## Revendications

1. Corps moulés monolithiques obtenus par un procédé comprenant les opérations de processus suivantes :
a) placement de dioxyde de silicium dans un récipient à réaction,
b) ajout d'une solution A contenant au moins un ou plusieurs silicates alcalins et du borate de potassium,
c) ajout d'une solution B contenant au moins un ou plusieurs porogènes et de l'eau,
d) ajout d'au moins un amide organique et
e) séchage du mélange réactionnel.

2. Corps moulés monolithiques obtenus par un procédé selon la Revendication 1, **caractérisés en ce qu'**ils contiennent de 0,1 à 0,3% en poids de bore.

3. Corps moulés monolithiques obtenus par un procédé selon la Revendication 1, **caractérisés en ce qu'**ils contiennent de 0,15 à 0,25% en poids de bore.

4. Corps moulés monolithiques obtenus par un procédé selon la Revendication 1, **caractérisés en ce qu'**ils contiennent de 0,18 à 0,22% en poids de bore.

5. Corps moulés monolithiques obtenus par un procédé selon la Revendication 1, **caractérisés en ce que** des polyalcools, de préférence de l'éthylène glycol, du diéthylène glycol ou du polypropylène glycol, particulièrement de préférence du polyéthylène glycol, du glycérol et du diglycérol et leurs mélanges sont utilisés en tant que porogènes.

6. Corps moulés monolithiques obtenus par un procédé selon la Revendication 1, **caractérisés en ce que** du formamide et/ou de l'urée sont utilisés en tant qu'amides organiques.

7. Corps moulés monolithiques obtenus par un procédé selon la Revendication 1, **caractérisés en ce que** le mélange réactionnel est séché jusqu'à 20 h à une température de 40°C à 60°C.

8. Corps moulés monolithiques obtenus par un procédé selon la Revendication 1, **caractérisés en ce qu'**une solution aqueuse C contenant un ou plusieurs sels de métaux de transition est ajoutée à la solution A.

9. Corps moulés monolithiques selon la Revendication 8 **caractérisés en ce que** des solutions aqueuses de sels de cuivre, de zinc et/ou de manganèse sont utilisées en tant que solution C.

10. Corps moulés monolithiques selon l'une des Revendications précédentes, **caractérisés en ce que** le mélange réactionnel est composé (% en poids):
de 35 à 85 % de silicate de potassium,
de 0,1 à 25 % d'au moins un gel de silice colloïdale,
de 0,1 à 30 % d'eau,
de 0,1 à 12 % d'au moins un porogène,
de 6 à 12 % d'au moins un amide organique,
de 0,1 à 5 % de borate de potassium,
de 0 à 10 % d'un sel d'au moins un métal de transition.

11. Corps moulés monolithiques selon l'une des Revendications 1-9, **caractérisés en ce que** le mélange réactionnel se compose (% en poids) de préférence:
de 50 à 60 % de silicate de potassium avec une densité de 1240 à 1261 kg/m³ (28/30 Baumé Grade),
de 5 à 10 % d'au moins un gel de silice colloïdale,
de 10 à 25 % d'eau,
de 3 à 6 % de polyéthylène glycol et/ou de diéthylène glycol,
de 5 à 10 % de formamide et/ou d'urée,
de 0,5 à 2 % de borate de potassium,
de 0 à 2 % de glycérol et
de 0 à 10 % d'un sel d'au moins un métal de transition.

12. Utilisation de corps moulés monolithiques selon l'une des Revendications précédentes en tant que matériau de séparation chromatographique pour la purification et la séparation de biopolymères.

13. Utilisation de corps moulés monolithiques selon l'une des Revendications précédentes en tant que matériau de séparation chromatographique pour la séparation sélective de biopolymères.
